(19) **Europäisches Patentamt**
**European Patent Office**
**Office européen des brevets**

(11) **EP 3 193 288 A1**

(12) **EUROPEAN PATENT APPLICATION**

(43) Date of publication:
**19.07.2017 Bulletin 2017/29**

(51) Int Cl.:
***G06Q 10/06*** *(2012.01)*     ***G06Q 10/08*** *(2012.01)*

(21) Application number: **16151686.9**

(22) Date of filing: **18.01.2016**

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO RS SE SI SK SM TR**<br>Designated Extension States:<br>**BA ME**<br>Designated Validation States:<br>**MA MD**<br><br>(71) Applicant: **N-SIDE S.A.**<br>**1348 Louvain-la-Neuve (BE)**<br><br>(72) Inventors:<br> • **David, Benoit**<br> **1325 Chaumont-Gistoux (BE)** | • **Coppe, Sébastien**<br> **5590 Achêne (BE)**<br> • **Mouthuy, Sébastien**<br> **1070 Anderlecht (BE)**<br> • **Chevalier, Philippe**<br> **1348 Louvain-la-Neuve (BE)**<br><br>(74) Representative: **Pappaert, Kris et al**<br>**De Clercq & Partners**<br>**Edgard Gevaertdreef 10 a**<br>**9830 Sint-Martens-Latem (BE)** |

(54) **METHODS FOR OPTIMISATION OF A SUPPLY CHAIN BY DETERMINING SHIPMENT VOLUMES AND/ OR STORAGE LEVELS**

(57)     The invention provides computer-implemented methods and tools for supply chain optimization. In one aspect, the present invention provides computer-implemented methods for supply chain optimization, wherein the supply chain comprises a plurality of depots and at least one production facility, wherein the method involves determining shipment volumes, storage volumes, and/or storage trigger levels in said supply chain, and wherein the method comprises the steps of a) demand forecasting using Discrete Event Simulation and Monte-Carlo simulations; b) re-supply strategy tuning; c) backward propagating the demand population; d) production planning; e) evaluating the final strategy; and; f) searching for best strategies.

**Description**

**FIELD OF THE INVENTION**

Provided herein are computer-implemented methods and tools for supply chain optimization. In one aspect, the present invention provides computer-implemented methods for supply chain optimization, wherein the supply chain comprises a plurality of depots and at least one production facility, wherein the method involves determining shipment volumes, storage volumes, and/or storage trigger levels in said supply chain, and wherein the method comprises the steps of a) demand forecasting using Discrete Event Simulation and Monte-Carlo simulations; b) re-supply strategy tuning; c) backward propagating the demand population; d) production planning; e) evaluating the final strategy; and; f) searching for best strategies.

**BACKGROUND**

Supply chains of large enterprises are complex systems that require advanced computer technologies for their effective management. In particular, managing shipment volumes, the magnitude of storage inventories, and minimum storage levels at which re-supply runs are triggered, is very challenging. This is especially the case in complex supply chains spanning many different companies and/or countries. Mathematical modelling and optimization are today essential computer-based techniques used to reduce the cost and to control the service level of supply chains. However, currently existing methods generally lack the speed, detail, robustness, versatility, and adaptability required in daily supply management practice. Accordingly, there is a need for novel methods for simulation and optimization of complex and unsteady supply chains including simulation and optimization of stock levels, shipment volumes, and/or resupply trigger levels.

**SUMMARY OF THE INVENTION**

The methods provided herein address one or more drawbacks of the methods of the prior art. In particular, the methods provided herein offer a very efficient and accurate method to address in an integrated way the following three main topics of supply chain management: demand forecasting, inventory management, and production planning. Accordingly, the efficiency of the production of goods, the storage of goods, and/or the shipment of goods can be greatly enhanced. Furthermore, the methods provided herein may address the particular case of a supply chain that never reaches a steady state and wherein the variability of demand in time is a major complexity. Such unsteady supply chains generally require a dynamical adjustment of the supply strategy based on an accurate demand forecasting and adaptive resupply algorithm. The inventors have found a way to leverage the combination of multiple state-of-the-art mathematical and computer science techniques in a set of algorithms to model precisely the variability of the demand and to infer from this variability the best inventory management strategy and production planning from the point of view of both cost and risk (service level). Shipment volumes, shipment intervals, storage volumes, and/or resupply trigger levels can then be adapted accordingly.

In some embodiments, methods of the present invention yield a curve of minimal cost for each given risk level. A risk level is measured as the probability of shortage in the supply chain. From these curves, decision makers can select the supply strategy offering the best trade-off between cost and risk. Shipment volumes, shipment intervals, storage volumes, and/or resupply trigger levels can then be adapted to match that optimum trade-off. Accordingly, the cost of logistics can be lowered while keeping the risk of shortage below a desired threshold.

More particularly, the invention provides computer-implemented methods for supply chain optimization, wherein the supply chain comprises a plurality of depots and at least one production facility, wherein the method involves determining shipment volumes, storage volumes, and/or storage trigger levels in said supply chain, and wherein the method comprises the steps of

    a) demand forecasting using Discrete Event Simulation and Monte-Carlo simulations;
    b) re-supply strategy tuning;
    c) backward propagating the demand population;
    d) production planning;
    e) evaluating a final strategy; and;
    f) searching for best strategies.

In some embodiments, the method further comprises the step:

    g) according to one of said best strategies, executing one or more actions chosen from the list comprising:

- producing goods in said at least one production facility in a pre-determined amount and/or at a pre-determined rate;
- maintaining the amount of goods in one or more depots comprised in said plurality of depots in a pre-determined range;
- receiving goods in one or more depots comprised in said plurality of depots;
- shipping goods to and/or from the at least one production facility, and/or the one or more depots comprised in said plurality of depots; and/or;
- shipping goods between one or more depots.

In some embodiments, the plurality of depots comprises a set of local depots and/or the supply chain may further comprise a plurality of demand locations, the demand locations optionally comprising shops, and wherein step a) involves the following sub step:

ai) modelling the demand of the supply chain using a set of agents, wherein

agents visit demand locations multiple times, and wherein the behaviour of an agent is simulated by modelling the way the agent consumes products.

In some embodiments, agent behaviour modelling further comprises the sub-step:

aii) taking into account multiple uncertainty parameters modelled by a probability curve, the multiple uncertainty parameters chosen from the list comprising opening of new or closure of existing demand locations, enrolment of clients, consumption profile or stratum assigned to clients, the frequency of visits to a demand location, the product consumed by the agent, and agent-drop out probability.

In some embodiments, the supply chain comprises a plurality of supply chain endpoints and wherein step a) involves simulating the demand on all supply chain endpoints at the same time.
In some embodiments, step b) involves the sub step:

bi) computing re-supply trigger levels and re-supply quantities from the demand realizations at each supply chain endpoint; the re-supply trigger levels corresponding to pre-determined amounts of goods in the plurality of demand locations at or below which said demand locations are resupplied.

In some embodiments, the trigger levels are computed such that the remaining stock at the instant of re-supply is sufficient to cover the demand occurring during the lead time for resupply with a certain probability $A_1$.
In some embodiments, step b) involves computing shipment volumes to cover the average demand over a time horizon $B_1$.
In some embodiments, step c) involves the substep:

ci) determining trigger levels and shipment volumes for nodes of consecutive levels i in the supply chain, the nodes comprising the plurality of depots, the plurality of demand locations, and the at least one production facility, wherein

- trigger levels are computed such that the remaining stock in a node of level i at the instant of re-supply is sufficient to cover the demand occurring during the lead time for resupply with a certain probability $A_i$; and,
- shipment volumes are determined to cover the average demand in node of level i over a time horizon $B_i$.

In some embodiments, step d) comprises the sub step:

di) determining the production planning in order to meet the consolidated demand with a probability C.

In some embodiments, step e) comprises measuring the risk of not having a product available at an endpoint to meet a demand, and measuring the total cost of the supply chain.
In some embodiments, the total cost of the supply chain comprises material and production cost, shipment cost, storage cost, and possible waste disposal cost.
In some embodiments, the methods involves the use of derivative-free optimization; preferably in which, for nodes of level $i$, with $i = 1$ to $n$, and with n the number of levels in the supply chain, $A_i$, $B_i$, and C are determined by means of derivative-free optimization.
In some embodiments, the derivative-free optimization involves the stepwise introduction of new strategies to update other strategies, and the distance between new strategies and the other strategies is determined based on the distance between the other strategies.

In some embodiments, the methods comprise the following steps:

- using the mean and variance of cost and risk, and the number of simulations that were run for each strategy, for computing the probability that one strategy outperforms the other strategies, wherein the central limit theorem and Bayes inference are used in the computation;
- if the probability that one strategy outperforms one or more other strategies is lower than a pre-determined value, increasing the number of simulations run on that one strategy until said probability is higher than or equal to said pre-determined value.

## BRIEF DESCRIPTION OF THE DRAWINGS

The following description of the figures of specific embodiments of the invention is merely exemplary in nature and is not intended to limit the present teachings, their application or uses.

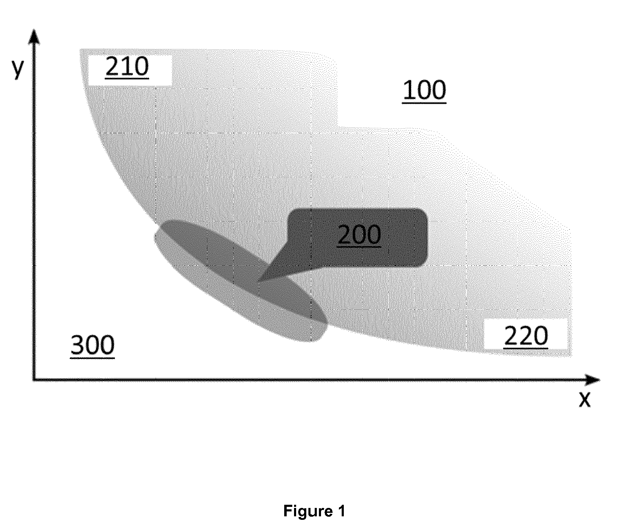

**Fig. 1:** Figure 1 shows a schematic representation of the trade-off between risk (X axis) and cost (Y axis) which is tackled in methods of the present invention.

Throughout the figures, the following numbering is adhered to: 100 - inefficient strategies; 200 - optimal strategies; 210 - high-cost, low risk strategies; 220 - low-cost, high-risk strategies; 300 - impossible strategies.

## DETAILED DESCRIPTION

The present invention will be described with respect to particular embodiments but the invention is not limited thereto but only by the claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional elements or method steps. The terms "comprising", "comprises" and "comprised of" when referring to elements or method steps cited herein also include embodiments which "consist of" said elements or method steps cited herein.

Furthermore, the terms first, second, third and the like as used herein are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" refers is itself also specifically, and preferably, disclosed.

The recitation of numerical ranges by endpoints includes all numbers and fractions subsumed within the respective ranges, as well as the recited endpoints.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

In some aspects, provided herein are methods for the simulation and optimization of complex and unsteady supply chains. This includes determining shipment volumes and/or storage trigger levels. One of the main added values of these methods comes from their ability to handle a very large amount of data, and to represent demand variability. As a further major advantage, the methods provided herein are computationally efficient. In some embodiments, demand is propagated backward along the supply chain to optimize the inventory management strategy at different levels. In some embodiments, the different levels include local depots, regional depots, and central warehouses. Also, the methods allow optimizing the production planning at production sites.

The terms "supply chain" and "supply network" are used interchangeably herein.

In some embodiments, supply networks comprise four levels: level 1, level 2, level 3, and level 4. Preferably, level 1 comprises demand locations or endpoints (for example shops for retail, or hospitals in clinical trials) which supply the final client. Preferably, level 2 comprises regional or local depots (typically supplying the demand locations of a country). Preferably, level 3 comprises central warehouse (typically supplying the regional depots of a continent). Preferably, level 4 comprises production sites (typically supplying the central warehouses). Preferably, central warehouses are located at production sites.

The terms "client" and "agent" as used herein represent the same entity. A client is the physical person generating a demand. In some embodiments, the client is a buyer and/or a consumer. The term "agent" generally refers to the way an actual client is represented in the algorithm. Generally speaking, an agent is a more generic concept than a client. In very general and abstract terms, an "agent" typically represents the simulation of an entity which generates some behaviour that influences the simulation results at some specific points in time.

In some embodiments, demand is captured by modelling all possible "clients" by agents. The method then simulates the possible behaviours of the agents in time. Also, a simulation of how those behaviours generate demand is included. The behaviour of an agent is typically governed by some random variables as for example the frequency of his visits to a supply chain end-point generating a demand. Another random variable is typically used to represent the type(s) of product for which the demand is generated during such visit. Generally, in order to represent the possible behaviours of the agents, multiple simulations with different and independent realizations of those random variables can be useful. Also, assumptions may be made about the parameters of those random variables (for example the min and max value of a uniform distribution, the mean value of a Poisson distribution, the mean and standard deviation for a Gaussian distribution, ...). These assumptions can be inputs for the method or can be refined using historical data (see later).

An end-point in a supply chain is a terminal node of the supply network where the client can acquire the product, that is to say where the final demand of product occurs. The term "demand location" is also used as a synonym for the term "end-point in a supply chain".

In particular embodiments, methods provided herein may be used for addressing a very large and complex supply chain with a number of "clients" up to 20,000, a number of time steps to simulate within the planning horizon up to 4,000 (daily time step over a planning period of 10 years), a number of demand locations up to 2,000, and/or a total number of products to supply up to 10,000,000.

Generally, the present methods involve the introduction of many random variables to model many possible behaviours. Accordingly, a very large number of independent simulations of the same process may be required to cover the spread of possible outcomes with a statistically sufficient accuracy. In particular embodiments, the Monte-Carlo simulation technique is used for that purpose. In particular embodiments, the present methods can handle up to 100,000 simulations.

For optimizing very complex supply chains, very efficient methods in terms of calculation time are required due to both the dimensions of the problem and due to the number of simulations to run. Discrete Event Simulation method offers this advantage by simulating agent behaviours only at some specific time steps, thereby avoiding iterating sequentially over all time steps in the simulation period. The method maintains for each agent the next time step this agent should be considered in the simulation. Calculations are then performed only at the required time steps, thereby significantly decreasing the number of operations to perform. This method is particularly suitable when the actions of the simulated agent occur only on some specific (discrete) points in time in the planning horizon. That is to say if for a specific client the visits to the end-point generating a demand do not occur at every time steps but only at some points in time with a long period of inactivity between these points in time.

Methods provided herein can also start from an existing situation. An existing situation may include current inventory levels and/or current status of all agents (clients) generating the demand.

In particular embodiments, and when starting from an existing initial point, the method can also leverage historical data recorded about actual (observed) behaviour of the clients. For example, if available in some database, the actual time of the visits of the clients to the end-points and the actual product(s) consumed during these visits can be used to refine the initial assumptions about the random variable parameters. For this purpose, the Bayesian estimation method may be used to balance the observed data with the initial assumption. The Bayesian method provides mathematical formulation to weight the variable parameter estimated from observed data with the initial assumption. Basically the formula increases the weight of observed data as a function of the number of observations. This method is particularly suitable to update the random variables automatically when the number of observations that can be collected for each agent can be very different.

Methods according to the present invention are able to take into account many complex factors of a supply chain such as factors chosen from the list comprising:

- Multi-level supply network (production sites, central warehouses, regional depots, local depots);
- Worldwide reach of supply chains with multiple languages (in some embodiments, multiple languages being taken into account as labels);
- Long and variable lead times;
- Product expiry;
- Various region dependent shipment and storage costs;
- High demand uncertainty; and,
- Loss of shipment.

Also, the present methods allow highly efficient computer implementations. Accordingly, processor and/or memory space requirements are minimized which results reduced energy use and/or more efficient use of computer infrastructure.

In a first aspect, the present invention provides a computer-implemented method for supply chain optimization, wherein the supply chain comprises a plurality of depots and at least one production facility, wherein the method involves determining shipment volumes, storage volumes, and/or storage trigger levels in said supply chain, and wherein the method comprises the steps of

a) Demand forecasting, preferably using Discrete Event Simulation and Monte-Carlo simulations;
b) Re-supply strategy tuning;
c) Backward propagation of demand population;
d) Production planning;
e) Final evaluation; and,
f) Searching for best strategies.

Accordingly, the aggregate of costs related to storage costs and shipment can be efficiently traded off with the risk of supply breaches.

Preferably, step a) involves calculating the demand and its variability at the endpoints of the supply chain using Monte-Carlo simulations. The endpoints of the supply chain may comprise local depots or shops. Also, step a) preferably involves the use of Discrete Event Simulation. Accordingly, demand can be simulated highly effectively at supply chain endpoints.

Preferably, step b) involves computing re-supply trigger levels and re-supply quantities at the endpoints of the supply chain, using the demand and its variability, and using $A_1$ and $B_1$ as tuning parameters to control risk and cost. This helps to improve the computational efficiency of the present methods. The interpretation of parameters A1 and B1 is explained later.

Preferably, step c) involves performing new simulations including the endpoints re-supply strategy to generate demand realizations at the direct upper nodes of the supply chain. This process is preferably repeated until the entry point(s) of the supply chain. The entry point(s) of the supply chain typically comprise production sites. This helps to improve the computational efficiency of the present methods.

Preferably, step d) involves computing the production planning for a given value of demand coverage probability C. This helps to improve the computational efficiency of the present methods.

Preferably, step e) involves the measuring and/or simulating the risk of supply breaches, and evaluating the cost of the entire value chain. This helps to improve the computational efficiency of the present methods.

Preferably, step f) involves derivative-free optimization. This helps to improve the computational efficiency of the present methods.

This method is further explained in detail below.

In some embodiments, the method is applied to determining shipment volumes, storage volumes, and/or storage trigger levels in retail industry supply chains. Methods according to the present invention can be highly valuable in retail industry supply chain management as supply chains in retail industry are becoming more and more complex, such as for example clinical trial supply chains. In particular, the importance of fashion makes goods more and more perishable; if goods are not sold quickly, they well be less desirable for consumers, and will have to be sold by losing money. Like clinical trial supply chains, retail industry supply chains generally do not reach a steady state due to seasonality, spot marketing campaigns, short life cycle of products, etc.....

In particular embodiments, the method further comprises the step:

g) according to one of said best strategies, executing one or more actions chosen from the list consisting of: producing goods in said at least one production facility in a pre-determined amount and/or at a pre-determined rate; maintaining the amount of goods in one or more depots comprised in said plurality of depots in a pre-determined range; receiving goods in one or more depots comprised in said plurality of depots; shipping goods to and/or from the at least one production facility, and/or the one or more depots comprised

in said plurality of depots; and/or shipping goods between one or more depots. Accordingly, real-world supply-chains can be made more efficient by means of the methods provided herein.

The terms "goods" and "products" as used herein may be used interchangeably.

In some embodiments, the demand of the supply chain is modelled using a set of agents. An agent represents a client or a set of clients whose behaviour generates demand at a certain time and location. In particular, the precise behaviour of an agent is preferably simulated by modelling its multiple visits to demand locations (for example shops), and by modelling the way agents consume products. Accordingly, demand in supply chains can be modelled efficiently.

In some embodiments, simulations are performed using the Discrete Event Simulation (DES) technique. The DES technique is well-suited for handling complex, unsteady supply chains comprising many events occurring at irregular time steps. It allows both short computing times and low memory allocation.

In some embodiments, step a) involves modelling agent behaviour taking multiple uncertainty parameters into account. The multiple uncertainty parameters may be chosen from the list comprising opening of new or closure of existing demand locations, enrolment of clients, consumption profile or stratum assigned to clients (e.g. male/female, age level, ...), the frequency of client visits to demand locations, the products consumed by clients, client's drop out probability, etc. Preferably, random generators with an appropriate probability curve are used to represent a possible outcome for each random parameter. An example of an appropriate probability curve is the Poisson distribution. Accordingly, the variability of the behaviour of agents in supply chains can be taken into account in an efficient way.

In some embodiments, step a) involves the use of Monte-Carlo simulations, preferably Monte-Carlo simulations for modelling the demand and its variability at the endpoints of the supply chain. The endpoints of the supply chain may comprise local depots or shops. In particular, one simulation over a certain period of time represents one possible realization of the demand. By computing a very high number of realizations, a fairly good representation of the space of possible demand curves can be obtained.

For very complex supply chains with high variability, up to 100 000 realizations (i.e. individual simulation runs comprised in the Monte-Carlo simulation) can be required to cover the demand variability with a sufficient accuracy. The combination of Monte-Carlo simulations and DES can be especially advantageous in this case as this approach allows computing the large amount of simulations in a limited time.

In some embodiments, step a) involves simulating the demand on all supply chain endpoints at the same time. This allows for the simulation to take into account possible correlation between the demand at different locations. Such correlations might occur when, for instance, two shops in the same region compete for the same customer base. Note that, as mentioned before, the terms "demand location" and "supply chain endpoint" may be used interchangeably.

In some embodiments, step b) involves computing the re-supply trigger levels and the re-supply quantities from the demand realizations at each endpoint. The re-supply trigger levels correspond to pre-determined amounts of goods in the plurality of demand locations at or below which said demand locations are resupplied. Computing the re-supply trigger levels and the re-supply quantities from the demand realizations at each endpoint can enhance the applicability and the versatility of the present methods; because the demand can show a high variability in time, re-supply trigger levels and re-supply quantities can be changed in time.

In some embodiments, step b) involves computing trigger levels. Preferably, the trigger levels are computed such that the remaining stock at the instant or re-supply is sufficient to cover the demand occurring during the lead time for resupply with a certain probability $A_1$. Preferably, Monte-Carlo simulations are used for generating numerous realizations of the demand which then allows characterizing the statistical distribution of the demand. Using quantiles, this statistical distribution can then be used to measure the trigger level for resupply for any given value of the probability $A_1$. Typically, the parameter $A_1$ depends on the desired service level (i.e. the probability/risk of supply breaches). Accordingly, $A_1$ plays an important role in the trade-off between cost and risk. In particular, a high value for $A_1$, i.e. a value close to 100%, ensures a low risk of shortage but produces high safety stocks that may generate high storage costs and, in case of perishable products, high wastes. Typical values for A are 99% to 99.9%. Preferably, the value of A is 99.9 in clinical trial supply chains wherein the risk of shortage has to be maintained very low.

In some embodiments, step b) involves computing shipment volumes to cover the average demand over a time horizon $B_1$. $B_1$ is a parameter which can significantly enhance the cost-risk trade-off. In particular, a high $B_1$ value corresponds to high shipment volumes and low shipment frequencies. Low shipment frequencies reduce shipment costs but can decrease flexibility, such that unnecessary materials are shipped.

In some embodiments step c), backward propagation of demand population, is executed as follows. For a given value of parameters $A_1$ and $B_1$, the re-supply strategy of each endpoint may be determined and can be simulated using the endpoint demand as an input. Typically, supply chain endpoints comprise local depots and/or shops. New (unseen) realizations of the endpoint demand may thus be generated using the process described for step (a), and may be used to simulate the re-supply strategy which in turn generates new demands for the depot supplying this endpoint. Endpoint demands and re-supply strategies may therefore be consolidated into demand realizations for the second last level of nodes in the supply chain (e.g. for regional depots). Using the same principle as described above for step b), re-supply strategies of the second last level of nodes in the supply chain may be determined, again using two general tuning parameters $A_2$ and $B_2$ driving the trigger levels and shipment volumes. The above procedure may be repeated to compute successively the demand and resupply strategies of the upstream levels i (with i a natural number > 1) until reaching the production sites. The i index in $A_i$ and $B_i$ refers to the level i of a supply network. At a given level i there can be many nodes. Defining parameters Ai and Bi for an entire level allows modelling a great variety of nodes, for example thousands of nodes, in level i by just two parameters: $A_i$ and $B_i$. Doing so can greatly increase the computational efficiency and reduce the memory needs of the present methods.

Parameters $A_i$ and $B_i$ may thus be used at each level to calibrate the strategy.

Accordingly, in some embodiments, step c) involves the sub step of determining trigger levels and shipment volumes for nodes of consecutive levels i in the supply chain. The nodes of the consecutive levels may comprise a plurality of depots, a plurality of demand locations, and/or at least one production facility. In particular, trigger levels may be computed such that the remaining stock in node of level i at the instant of re-supply is sufficient to cover the demand occurring during the lead time for resupply with a certain probability $A_i$. Also, shipment volumes may be computed to cover the average demand in node of level i over a time horizon $B_i$

Step c) allows determining demand throughout the nodes of supply chains, including at production facilities. The above embodiments enable enhancing the efficiency by which step c) is executed.

In some embodiments, step d) comprises the sub step of determining the production planning in order to meet the consolidated demand with a probability C. The term "consolidated demand" refers to the demand at a production site. In some embodiments, the determination of parameter C is done taking into account constraints on batch size, product expiry, and production lead-time as boundary conditions. Accordingly, the production planning may be determined in an efficient way while taking real-world, up-to-date information into account.

In some embodiments, meta-parameters Ai, Bi and C may be used. Generally, parameters Ai and Bi are used per level of the supply network, and one parameter C is used for the production site(s). The parameters Ai, Bi, and C are used to drive the actual supply rules of all nodes of the supply network and the production quantities. Preferably, at each level i, for a given value of the pair of parameters Ai and Bi, the same value for all nodes of that level, a different resupply rule will still be derived for each node of that level, depending on the specific demand variability observed on that node. These different resupply rules will be computed to achieve the desired risk level (Ai) and demand coverage horizon (Bi) for all nodes but will typically correspond to different trigger levels and resupply quantities on each node since the shape of the demand and its variability may be different on each node.

In some embodiments, the parameters Ai, Bi and C may be seen as the tuning button one can play with to derive the actual resupply rule on each node and which can be used to optimize risk and cost. Thanks to the limited number of such tuning variables, the space of search for the optimization algorithm remains very limited. The optimization of the resupply strategies of all nodes in the network is therefore simplified to the optimization of a very small number of decision variables Ai, Bi and C.

In some embodiments, step e) comprises the step of measuring the risk of not having a product available at an endpoint to meet a demand. Preferably, step e) also comprises the step of measuring the total cost of the supply chain. Accordingly, the performance of specific supply chain strategies may be evaluated efficiently.

In some embodiments, the total cost of the supply chain comprises material and production cost, shipment cost, storage cost, and possible waste disposal cost. This allows taking realistic conditions into account in an efficient way.

We have elaborated on how risk and cost may be estimated for one set of tuning meta-parameters $A_i$, $B_i$, and/or $C$, for level $i$, with $i = 1$ *to n*, with *n* the number of levels in a supply chain network (typically n=2). When used, these meta-parameters strongly influence the performance of supply strategies. However, even if the number meta-parameters to be tuned is small, the large number of possible values one can investigate for those parameters $A_i$, $B_i$, and/or $C$ may make it challenging to identify their best possible combinations, which are located on the Pareto Boundary (see Fig. 1).

We now discuss how step f), searching for best strategies, may be performed according to some embodiments of the methods provided herein.

In order to efficiently characterize the Pareto boundary of the best possible strategies in the risk versus cost space, a surrounding optimization algorithm may be used wherein the surrounding optimization algorithm investigates a series of values for the set of meta-parameters $A_i$, $B_i$, and/or $C$. Derivative-Free Optimization may be used by the algorithm in order to evaluate as less strategies as possible. Derivative-Free Optimization techniques are generally well-suited for use in methods provided herein because the search space is rather smooth and because evaluation of risk and cost of a set of values is generally very expensive (typically involving Monte-Carlo simulations with each simulation involving a discrete event simulation of a complex random process).

In some embodiments, the search for best strategies involves starting from a set of initial strategies, i.e. an initial set of meta parameters. This set is likely sub-optimal. In other words, the initial set of meta parameters is likely located in an area of cost-risk space which does not lie on the Pareto boundary. This set of initial parameters may then be evaluated for their costs and risks. Then, a new strategy may be generated, and its performance may be evaluated. In some embodiments, the new strategy is pairwise combined with the older strategies, and the new strategy is added if it outperforms some other strategy. Preferably, this is repeated until the search does not find any improving strategy for $t_{max}$ iterations. At this point the set of strategies is considered as a good representation of the Pareto Front. The parameter $t_{max}$ is problem-specific and depends on the accuracy required by the user.

In some embodiments, derivative-free optimization techniques are used in the search for best strategies. Derivative-free optimization techniques, such as Multi-Directional Search or the Nelder-Mead method, enable speeding up the optimization phase because they direct the algorithm towards new good strategies quickly. A strategy s is a set of values for the parameters $A_i$, $B_i$, and/or $C$, for level $i$, with $i = 1$ *to n*. We denote the value of the parameter $A_i$ in the strategy s by $s(A_i)$. Preferably, these methods select several strategies $s_1,...,s_k$ in the current set and compose them to obtain a new strategy set, the performance of which can then be assessed. Preferably, the more distant the strategies $s_1,...,s_k$ are, the more distant will be $s_{new}$ from the original strategies. This is believed to enable the DFO algorithm to first diversify the search and finds completely new strategies at the beginning (when the set of strategies is sub-optimal with many different solutions). This will lead the DFO algorithm to solutions close to the Pareto-front quickly. When the set contains similar strategies, it is likely to represent the Pareto-front well, and the algorithm will intensify the search around this front. The distance between two strategies is the sum over all the tuning parameters of the absolute difference of the values assigned by these two strategies: $\sum_{p \in P} |s_1(p) - s_2(p)|$ wherein $P$ is the set of all parameters $A_i$, $B_i$, and $C$.

For optimization of stochastic supply chains, a huge number of runs (simulations) is generally required in order to use Derivative-Free optimization techniques with precision. Executing large numbers of simulations is generally expensive. In order to reduce the need for large numbers of simulations, applicant developed methods which enable evaluating strategies with varying precision. This may speed up the execution of the methods provided herein.

Accordingly, methods are provided for only evaluating strategies with great precision when it is required to compare them. Preferably, sub-optimal strategies are evaluated to a level of precision that allows comparing them with the best ones. Indeed, it is generally useless to achieve great precision in evaluating sub-optimal strategies as it is clear that they are worse than the best ones. Basically the level of precision and hence the number of simulations required to evaluate each strategy is generally adjusted to the distance to the other strategies it is compared too. As the algorithm progressively moves toward the Pareto boundary, the distance between the strategies typically decreases and the number of simulations required to be able to discriminate their performance increases.

In some embodiments, the derivative-free optimization involves comparing two solutions. Preferably, the comparison involves the use of the mean and variance of the cost and risk of the solutions, the number of simulations run for each strategy, and the use of the central limit theorem and Bayes inference. A simulation run typically corresponds to a series of Monte-Carlo simulations of the demand curves at each demand location, each Monte-Carlo simulation involving a discrete event simulation of the process generating the demand. This process is modelled using agents representing the final client consuming the product subject to the supply chain. When both performances of the simulation runs are close, and if few simulations have been run for both solutions so far, more simulations may be run on the two solutions. This is preferably done because the probability that one solution outperforms the other will be low, and more simulations will be required to determine whether or not this is the case. On the other hand, when both performances are very different, one simulation may be discarded after only a small number of simulations. A small number of simulations may be, for example, 100, 1000, or 10000 simulations. Accordingly, if the probability that one strategy outperforms one or more other strategies is lower than a pre-determined value, increasing the number of simulations run on that one strategy until said probability is higher than or equal to said pre-determined value. As a result, computational resources can be efficiently allocated to the detailed evaluation of strategies which actually need to be evaluated in detail.

In some embodiments, the method is applied to determining shipment volumes, storage volumes, and/or storage trigger levels in clinical trial supply management. The reach of clinical trial supply chains (which is often worldwide and with typically three levels - central warehouse, local depot, investigational sites - for a phase III trial), the highly variable and difficult to anticipate demand (which is a result of patient recruitment in investigational sites and patient visits during treatment), the expiry of products, the high cost of packages and shipments (for example in temperature controlled shipping), are some of the reasons why the computational approach described herein results in a better trade-off between clinical trial cost, and the risk of supply shortages.

Methods provided herein may be deeply integrated in the global process of clinical trial supply management. In particular, they may first be used at the pre-study planning and budgeting stage to help assessing impact of different study designs on the supply chain cost and risk. They may then be used at study kick-off to launch the initial production plant and to setup the supply chain strategy, which includes determining the amount of safety stocks and resupply volumes. Finally, the methods provided herein may be used on a regular basis during the course of clinical trials. Typically, the methods may be used every month. Accordingly, production planning and supply strategies may be re-assessed based on actual operation and based on observed deviations with respect to the initial plan. For this purpose, collecting actual data about the status of the patients in their assigned treatment and inventory levels at each supply chain node is required. These data are generally available in information systems typically used for the operational management of supply chains, for example in the operational management of clinical trial supply chains, known as IVRS (Interactive Voice Response System) or as IWR (Interactive Response Web-Based System). Our method can exploit data provided by these IVRS / IWR systems for the re-assessment of the supply strategy of an ongoing study.

Plots representing simulations which may be generated by the present methods may be visualised such that supply chain managers may easily see which costs are related to which service levels, and such that supply chain managers may choose appropriate trade-offs. Once this choice is made by a supply chain manager, actual re-supply parameters (trigger levels and shipment quantities) for each node of the supply chain may be returned along with the production planning.

EXAMPLES

1. Risk and Cost

In a first example, reference is made to Fig. 1. Fig. 1 shows a schematic representation of the trade-off between risk and cost which is tackled in methods of the present invention. In particular, risk is plotted on the x-axis and cost is plotted on the y-axis. A particular point in the risk-cost space is called a strategy. Three types of strategies are shown in Fig. 1: inefficient strategies (100), optimal strategies (200), and impossible strategies (300).

A strategy A, having a position in risk-cost space $(x_A, y_A)$, is an inefficient strategy (100) if and only if there exists at least one strategy B, having a position in risk-cost space $(x_B, y_B)$, for which:

$$\big((x_A \geq x_B)\ AND\ (y_A > y_B)\big) OR \big((x_A > x_B)\ AND\ (y_A \geq y_B)\big). \tag{1}$$

In other words, the cost of an inefficient strategy can be reduced without increasing risk and/or the risk of an inefficient strategy can be reduced without increasing cost. Or, formulated differently again, a strategy is said to be inefficient if there exists (it is possible to find) another strategy offering the same level of risk at a lower cost or a lower risk level for the same cost.

Optimal strategies (200) are strategies A for which no strategies B can be found such that Equation (1) is true. In other words, the cost of an optimal strategy (200) can only be lowered by increasing its risk, and the risk of an optimal strategy (200) can only be lowered by increasing its cost. The optimal strategies (200) comprise both high-cost, low risk strategies (210) and low-cost, high-risk strategies (220). Also, the optimal strategies (200) form the boundary between the inefficient strategies (100) and the impossible strategies (300). This boundary is called the Pareto boundary. Impossible strategies (300) are strategies which cannot be accomplished in practice. In other words, impossible strategies (300) correspond to positions in risk-cost space which are outside the domain of the possible strategies. The possible strategies consist of the union of the inefficient strategies (100) and the optimal strategies (200).

2. Supply chain

In the present example, reference is made to a particular supply chain comprising four levels; namely demand locations, regional depots, central warehouses, and production sites. Each level comprises several nodes. For example, the demand locations comprise several individual locations (end-points of the network, shops), the local depots comprise several individual depots, the central warehouses comprise several individual warehouses, and the production sites comprise several individual production sites.

3. Supply network

In the present example, reference is made to a typical supply network with 10 production sites, 100 depots (level 2) and 1000 demand locations (level 1). This network has 1100 nodes (level 2 and level 1) for which resupply strategies have to be determined and for which 10 production plannings have to set. For each node the resupply strategy corresponds to a trigger level and a shipment volume. In other words, for each node, two quantities (or more if we make them time-dependent) have to be set. Assuming only one batch of production we have 10 quantities to determine at the production sites. In total this makes a minimum of 2210 variables to optimize. The present methods allow replacing these 2210 variables by, in this example, 5 variables A1, B1, A2, B2 and C from which the 2210 variables we are eventually interested in will be directly derivable. This considerably simplifies the optimization problem. Because of this dramatic simplification, the present methods allow solving analogous problems even in very complex supply chains.

**Claims**

1. Computer-implemented method for supply chain optimization, wherein the supply chain comprises a plurality of depots and at least one production facility, wherein the method involves determining shipment volumes, storage volumes, and/or storage trigger levels in said supply chain, and wherein the method comprises the steps of

    a) demand forecasting using Discrete Event Simulation and Monte-Carlo simulations;
    b) re-supply strategy tuning;
    c) backward propagating the demand population;

d) production planning;
e) evaluating a final strategy; and;
f) searching for best strategies.

2. The method according to claim 1 further comprising the step:

g) according to one of said best strategies, executing one or more actions chosen from the list comprising:

• producing goods in said at least one production facility in a pre-determined amount and/or at a pre-determined rate;
• maintaining the amount of goods in one or more depots comprised in said plurality of depots in a pre-determined range;
• receiving goods in one or more depots comprised in said plurality of depots;
• shipping goods to and/or from the at least one production facility, and/or the one or more depots comprised in said plurality of depots; and/or;
• shipping goods between one or more depots.

3. The method according to claim 1 or 2 wherein the plurality of depots comprises a set of local depots and/or wherein the supply chain may further comprise a plurality of demand locations, the demand locations optionally comprising shops, and wherein step a) involves the following sub step:

ai) modelling the demand of the supply chain using a set of agents, wherein
agents visit demand locations multiple times, and wherein the behaviour of an agent is simulated by modelling the way the agent consumes products.

4. The method according to claim 3 wherein agent behaviour modelling further comprises the sub-step:

aii) taking into account multiple uncertainty parameters modelled by a probability curve, the multiple uncertainty parameters chosen from the list comprising opening of new or closure of existing demand locations, enrolment of clients, consumption profile or stratum assigned to clients, the frequency of visits to a demand location, the product consumed by the agent, and agent-drop out probability.

5. The method according to any one of claims 1 to 4 wherein the supply chain comprises a plurality of supply chain endpoints and wherein step a) involves simulating the demand on all supply chain endpoints at the same time.

6. The method according to any one of claims 1 to 5 wherein step b) involves the sub step:

bi) computing re-supply trigger levels and re-supply quantities from the demand realizations at each supply chain endpoint; the re-supply trigger levels corresponding to pre-determined amounts of goods in the plurality of demand locations at or below which said demand locations are resupplied.

7. The method according to claim 6 wherein the trigger levels are computed such that the remaining stock at the instant of re-supply is sufficient to cover the demand occurring during the lead time for resupply with a certain probability $A_1$.

8. The method according to claim 6 or 7 wherein step b) involves computing shipment volumes to cover the average demand over a time horizon $B_1$.

9. The method according to claim 8 wherein step c) involves the substep:

ci) determining trigger levels and shipment volumes for nodes of consecutive levels i in the supply chain, the nodes comprising the plurality of depots, the plurality of demand locations, and the at least one production facility, wherein

• trigger levels are computed such that the remaining stock in a node of level i at the instant of re-supply is sufficient to cover the demand occurring during the lead time for resupply with a certain probability $A_i$; and,
• shipment volumes are determined to cover the average demand in node of level i over a time horizon $B_i$.

10. The method according to any one of claims 1 to 9 wherein step d) comprises the sub step:

di) determining the production planning in order to meet the consolidated demand with a probability C.

11. The method according to any one of claims 1 to 10 wherein step e) comprises measuring the risk of not having a product available at an endpoint to meet a demand, and measuring the total cost of the supply chain.

12. The method according to claim 11 wherein the total cost of the supply chain comprises material and production cost, shipment cost, storage cost, and possible waste disposal cost.

13. The method according to any one of claims 1 to 12 involving the use of derivative-free optimization; preferably in which, for nodes of level $i$, with $i = 1$ $to$ $n$, and with n the number of levels in the supply chain, $A_i$, $B_i$ and C are determined by means of derivative-free optimization.

14. The method according to any one of claims 13 wherein the derivative-free optimization involves the stepwise introduction of new strategies to update other strategies, and wherein the distance between new strategies and the other strategies is determined based on the distance between the other strategies.

15. The method according to claim 14 involving the following steps:

• using the mean and variance of cost and risk, and the number of simulations that were run for each strategy, for computing the probability that one strategy outperforms the other strategies, wherein the central limit theorem and Bayes inference are used in the computation;
• if the probability that one strategy outperforms one or more other strategies is lower than a pre-determined value, increasing the number of simulations run on that one strategy until said probability is higher than or equal to said pre-determined value.

**Figure 1**

Europäisches
Patentamt

European
Patent Office

Office européen
des brevets

# EUROPEAN SEARCH REPORT

**Application Number**

EP 16 15 1686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Computer network - Wikipedia, the free encyclopedia", , 31 January 2010 (2010-01-31), XP055117444, Retrieved from the Internet: URL:http://en.wikipedia.org/w/index.php?title=Computer_network&oldid=341100015 [retrieved on 2014-05-12] * the whole document * ----- | 1-15 | INV. G06Q10/06 G06Q10/08 |

TECHNICAL FIELDS
SEARCHED     (IPC)

G06Q

The present search report has been drawn up for all claims

| Place of search | Date of completion of the search | Examiner |
|---|---|---|
| Munich | 2 March 2016 | Hopper, Eva |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)